# EUROPÄISCHE PATENTSCHRIFT

(11) **EP 3 913 797 B1**
(45) Veröffentlichungstag und Bekanntmachung des Hinweises auf die Patenterteilung: **08.11.2023**
(21) Anmeldenummer: 21168790.0
(22) Anmeldetag: 16.04.2021
(51) Int. Cl.: H02S 30/10

(54) **STAPELBARES PHOTOVOLTAIKMODUL**
STACKABLE PHOTOVOLTAICS MODULE
MODULE PHOTOVOLTAÏQUE EMPILABLE

(30) Priorität: 19.05.2020 DE 102020113462
(43) Veröffentlichungstag der Anmeldung: 24.11.2021
(73) Patentinhaber: KoBa Holding GmbH, 9556 Liebenfels (AT)
(72) Erfinder: BATTISTUTTI, Rene, 9210 Pörtschach am Wörthersee (AT)
(74) Vertreter: Riebling, Peter

(56) Entgegenhaltungen:
- EP-A1- 2 346 089
- CN-A- 108 667 415
- US-A1- 2015 256 121

## Beschreibung

Die Erfindung betrifft ein stapelbares Photovoltaikmodul nach dem Oberbegriff des Patentanspruches 1.

Photovoltaikmodule wandeln das Licht der Sonne in elektrische Energie um. Das Modul besteht im Wesentlichen aus siliziumbasierten Solarzellen, die auf einen Rahmen montiert und von einer Glasplatte abgedeckt sind. Die Lagerung und der Transport der Module gestalteten sich bisher schwierig, da die Module übereinander gelegt bzw. gestapelt werden. Hierbei muss insbesondere ein Verrutschen der Module verhindert werden. Darüber hinaus entsteht durch das Übereinanderstapeln ein hohes Gesamtgewicht, welches von den unteren Modulen des Stapels getragen werden muss.

Aus dem Stand der Technik sind bereits einige Lösungen bekannt, um das gegenseitige Verrutschen der Module zu verhindern.

Mit der DE 10 2011 113 143 A1 wird eine Stapelleiste mit Druckentlastung für den Transport von Solarmodulen offenbart. Bei der Stapelleiste handelt es sich um ein separates Bauteil, welches seitlich auf das Solarmodul geklemmt wird. Um ein Verrutschen der Photovoltaik-Module zu verhindern, weist die erste Stapelleiste einen Vorsprung auf der Oberseite auf, welcher in einen Rücksprung einer zweiten Stapelleiste eingreift. Nach dem Einbau des Photovoltaikmoduls muss die Stapelleiste entweder entsorgt werden oder aufwändige zu dem Produktionsstandort des Photovoltaikmoduls für eine Wiederverwendung transportiert werden.

Mit der DE102008051426A1 wird ein stapelbarer Photovoltaik-Modul-Rahmen offenbart, welcher das Halbleiter-Bauelement umfangsseitig umgibt. Der Rahmen ist als Hohlprofil ausgebildet und weist sogenannte Anti-Verrutsch-Elemente auf. Bei den Anti-Verrutsch-Elementen handelt es sich um Vorsprünge und Aussparungen, welche bei einem Übereinanderstapeln von mehreren Rahmen ineinandergreifen. Des Weiteren werden als Anti-Verrutsch-Elemente auch Abstufungen offenbart, welche bei einem Übereinanderstapeln mit der darüber liegenden Abstufung zusammenwirken und dadurch ein Verrutschen der Rahmen verhindern. Die im Rahmen integrierten Anti-Verrutsch-Elemente weisen alle abgewinkelte, scharfe Kanten auf. Derartige Kanten sind zwar gut um ein Rutschen der Rahmen untereinander zu verhindern, jedoch können durch die scharfen Kanten beim Stapeln der Module Beschädigung auf der Rahmenoberfläche entstehen.

Die EP 2 401 770 B1 offenbart eine Vorrichtung für Photovoltaik-Module, die zum Transport der Module geeignet ist. Die Vorrichtung besteht im Wesentlichen aus einem Hohlkammerprofil, welches umfangsseitige das Halbleiter-Bauelement umgibt, wobei sich das Halbleiter-Bauelement in eine U-förmige Aufnahme des Rahmens befindet. Der Rahmen weist unterschiedliche Vor- und Rücksprünge auf, welche bei einem Übereinanderstapeln ineinander eingreifen.

Die oben genannten Vorrichtungen weisen teilweise scharfe Kanten auf, mit welchen bei einem Übereinanderstapeln von mehreren Photovoltaikmodulen eine Beschädigung auf dem darunterliegenden Modul verursacht wird. Darüber hinaus ist die umfangsseitige Montage der bekannten Hohlrahmenprofile nur mit großem Aufwand an das Halbleiter-Bauelement möglich.

Mit der EP 2 346 089 A1 wird ein Solarzellenplatteneinheit mit Ausrichtungsmittel offenbart. Die Solarzellenplatteneinheit besteht aus einem Rahmen mit einzelnen Rahmenelementen, welche mit Eckverbinder verbunden sind. Die Eckverbinder weisen Vorsprünge und die Rücksprünge auf, die ineinandergreifen, wenn ein erster Rahmen auf einen zweiten Rahmen angeordnet ist. Es findet somit eine Lastübertragung zwischen den einzelnen Rahmen ausschließlich über die Eckverbinder statt.

Der Erfindung liegt deshalb die Aufgabe zugrunde, die Montage eines stapelbaren Photovoltaikmodul zu vereinfachen und ferner ein Modul zu schaffen, welches bei einem Übereinanderstapeln von mehreren Modulen keine Beschädigungen verursacht. Die Erfindung ist in dem Anspruch 1 definiert.

Wesentliches Merkmal ist, dass das stapelbare Photovoltaikmodul einen Rahmen aus mehreren Rahmenelementen aufweist, welche mit mindestens einem Verbinder verbunden sind.

Die erfindungsgemäße Ausführungsform hat den Vorteil, dass die einzelnen Rahmenelemente ganz einfach auf die Seitenkanten der rahmenlosen Photovoltaikelemente gesteckt werden können. Im Anschluss daran werden die einzelnen Rahmenelemente mit den Verbindern zu einem umlaufenden Rahmen verbunden.

Bei einer ersten bevorzugten Ausführungsform besteht der Rahmen aus vier Rahmenelementen, welche mit vier Verbindern zu einem viereckigen Rahmen verbunden sind. Die länglichen Rahmenelemente stoßen hierbei mit einer Gehrung aufeinander. Dies bedeutet, dass die beiden Schnittflächen der Rahmenelemente in einem gleichen Winkel aufeinanderstoßen, wodurch sich ein stufenloser Übergang zwischen den angrenzenden Rahmenelementen ergibt. Darüber hinaus werden die Kontakt- bzw. Verbindungsflächen vergrößert und die Stabilität der Verbindung zwischen den beiden Rahmenelementen erhöht.

Bei der bevorzugten Ausführungsform weisen die beiden Rahmenelemente eine Gehrung mit einem 45° Winkel auf. Die Stoßfuge der beiden Rahmenelemente befindet sich im Bereich der Ecke (Kante), so dass sie weniger in Erscheinung tritt. Der Eckverbinder wirkt dann wie eine Gehrungsklammer, welcher die beiden angrenzenden Rahmenelemente fixiert.

Bei einer weiteren bevorzugten Ausführungsform sind auf einer Seite des Photovoltaikmoduls mehrere Rahmenelemente mit mehreren Gehrungen vorhanden. Die Verbindung der einzelnen Rahmenelemente erfolgt dann mit jeweils einem Verbinder. Dies hat den Vorteil, dass bei besonders langen Photovoltaikelementen mehrere Rahmenelemente hintereinander angeordnet werden können, wobei aufgrund der Gehrungen kein Übergang zwischen den einzelnen Rahmenelementen feststellbar ist.

Die Verbindung der Rahmenelemente erfolgt bevorzugt durch einen Verbinder. Die vorliegende Erfindung versteht unter einem Verbinder jede Verbindungstechnik, welches es ermöglicht die zwei angrenzenden Rahmenelemente zu verbinden. Der Verbinder kann beispielsweise als Eckverbinder mit 90° Winkel ausgebildet sein.

Bei einer ersten bevorzugten Ausführungsform werden die Verbinder mittels Einpresstechnik in das Hohlkammerprofil eingepresst. Das Einpressen erfolgt dergestalt, dass im fertigen Zustand die Verbinder bei den PV-Modulen nicht mehr sichtbar sind. Es ist jedoch auch möglich die Verbinder mit einer Klebeverbindung, Schweißverbindung oder einer Schraubverbindung an den Rahmenelementen anzuordnen. Unter einem Verbinder wird sowohl ein Verbinder im Eckbereich des Rahmens, als auch ein Verbinder an der Seitenfläche des Rahmens verstanden.

Bevorzugt weisen die Verbinder ein nominelles 4%-iges Übermaß (z.B. 5,9 zu 5,2 mm) vor dem Einpressvorgang in das Rahmenelement auf, wobei eine Verbindung durch eine Reibschweißverbindung zwischen den Verbindern und den Rahmenelementen erreicht wird. Andere Übermaße sind je nach Ausprägungsgrad bzw. Bauart der Rahmenelemente ebenfalls möglich. Die Verpressung der Verbinder kann auch mit Untermaß erfolgen. Hierbei wird der Eckverbinder in das Hohlkammerprofil des Rahmens gesteckt und dann im Fertigungsprozess mechanisch "eingeclincht".

Bevorzugt weist das Rahmenelement eine U-förmige Aufnahme auf, welche auf die jeweiligen Seitenränder der Solarzelle bzw. des Photovoltaikelements gesteckt wird.

Bei einer weiteren bevorzugten Ausführungsform ist der Rahmen als Hohlkammer-Profil mit einem randseitig umschlossenen Hohlraum ausgebildet, welcher zur Verlegung von Kabeln und/oder Leitungen genutzt werden kann.

Das Rahmenelement weist bevorzugt ausschließlich abgerundete Vorsprünge und abgerundete Vertiefungen auf, so dass Beschädigungen auf den anderen Oberflächen vermieden werden.

Bei einer bevorzugten Ausführungsform befindet sich ein abgerundeter Vorsprung auf der Oberseite des Rahmenelements, d.h. auf dem höchsten Punkt des Rahmenelements. Auf der gegenüberliegenden Seite des Rahmenelements befindet sich ein abgerundeter Rücksprung. Der Vorsprung des ersten Rahmenelements greift nun bei einem Übereinanderstapeln von mehreren Photovoltaikmodulen in den Rücksprung eines zweiten Rahmenelements, welches oberhalb des ersten Rahmenelements angeordnet wird. Bevorzugt weisen die Rundungen des Vorsprungs und der Vertiefung gewisse Toleranzen auf, welche ein Gleiten des Vorsprungs in die Vertiefung ermöglichen. Darüber hinaus werden durch die Rundungen scharfe Kanten vermieden und dadurch Beschädigungen beim Übereinanderstapeln reduziert. Durch die besondere Form des Rahmenelements ist es nun möglich mehrere Photovoltaikmodule z.B. auf Paletten übereinander zu stapeln, wobei eine schonende Lastabtragung über die profilierten Rahmenelemente erfolgt.

Das Profil des Rahmenelements ist derart ausgebildet, dass sich bei einem Übereinanderstapeln die einzelnen Photovoltaik-Elemente nicht berühren können. Dies wird durch einen Profilsteg erreicht, welcher sich an der Unterseite des Rahmenelements befindet und sich teilweise in Längsrichtung zur Mitte des Photovoltaikmoduls erstreckt. Der Profilsteg dient somit als Schutzsteg bzw. Abdeckung mit welcher insbesondere eine schräges Übereinanderstapeln der einzelnen Module verhindert wird. Durch den Aufnahmesteg wird eine Verbreiterung des Rahmenprofils in Längsrichtung ermöglicht, so dass es einfacher ist das obere Modul mit der Vertiefung auf das darunterliegende Modul mit dem Vorsprung aufzulegen.

Bei einer weiteren bevorzugten Ausführungsform weist das Rahmenelement Abflussöffnungen (Drainageöffnungen) auf. Die Abflussöffnungen ermöglichen ein Abfließen von Kondenswasser bzw. allg. von eingedrungenem Wasser aus dem Rahmen.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Soweit einzelne Gegenstände als "erfindungswesentlich" oder "wichtig" bezeichnet sind, bedeutet dies nicht, dass diese Gegenstände notwendigerweise den Gegenstand eines unabhängigen Anspruches bilden müssen. Dies wird allein durch die jeweils geltende Fassung des unabhängigen Patentanspruches bestimmt.

Im Folgenden wird die Erfindung anhand von einer, lediglich einen Ausführungsweg darstellenden Zeichnung näher erläutert. Hierbei gehen aus der Zeichnung und ihrer Beschreibung weitere erfindungswesentliche Merkmale und Vorteile der Erfindung hervor.
- Figur 1:: Schnittdarstellung von mehreren stapelbaren Photovoltaikmodulen auf einer Palette
- Figur 2:: Schnittdarstellung des erfindungsgemäßen Photovoltaikmoduls
- Figur 3:: Schnittdarstellung des erfindungsgemäßen Rahmenelements
- Figur 4:: Draufsicht auf die Rahmenelemente mit Gehrungen im Eckbereich und Verbindern
- Figur 5:: Darstellung eines Eckverbinders
- Figur 6:: Draufsicht auf das erfindungsgemäße Photovoltaikmodul
- Figur 7:: Draufsicht auf die Rahmenelemente mit Gehrungen und geraden Verbindern
- Figur 8:: Darstellung eines geraden Verbinders

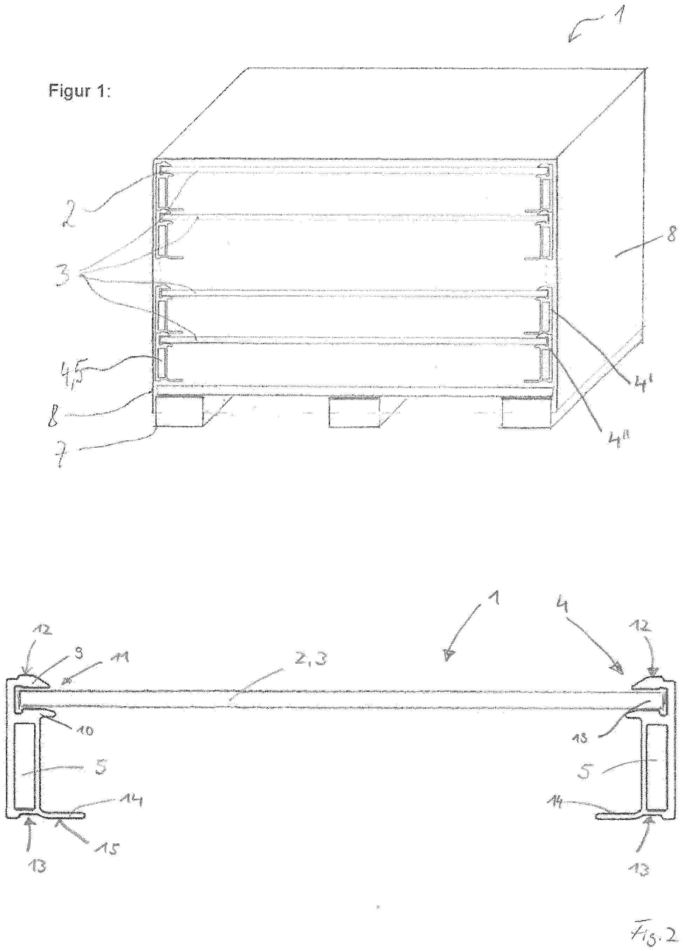

Mit der Figur 1 werden mehrere Photovoltaikmodule 1 gezeigt, welche übereinander angeordnet auf einer Palette 7 sind. Die Photovoltaikmodule 1 bilden einen Stapel und sind von einer Stretchfolie 8 umgeben. Durch die Stretchfolie 8 werden die Photovoltaik-Module 1 während des Transports gegen Verschmutzung geschützt.

Ein Photovoltaikmodul 1 besteht aus einem Rahmen 21, welcher die Solarzelle 2 bzw. das Photovoltaik-Element 3 umfangsseitig umgibt. Der Rahmen 21 besteht aus mehreren Rahmenelementen 4, 4', 4", welche geeignet sind, um über einander angeordnet zu werden. Dies ergibt sich aus der Figur 1, welche zeigt, dass z.B. sich über einem ersten Rahmenelement 4' ein zweites Rahmenelement 4" befindet. Das Rahmenelement 4 ist profiliert ausgebildet und weist Vorsprünge 12 und Rücksprünge 13 auf, welche beim Übereinanderstapeln der Photovoltaikmodule 1 ineinandergreifen und so die einzelnen Photovoltaik-Module 1 untereinander fixieren.

Das Rahmenelement 4 besteht beispielsweise aus einem Metall, Kunststoff oder dergleichen und weist eine Hohlkammer 5 auf. Durch das Hohlkammerprofil wird das Gewicht des Rahmens 21 deutlich reduziert. Gleichzeitig kann durch die profilierte Ausbildung des Rahmenelements 4 eine hohe Festigkeit erreicht werden. Ein weiterer Vorteil des Hohlkammer-Profils besteht darin, dass in dem Hohlraum 5 beispielsweise Anschlusskabel geführt werden können, welche so gegen Beschädigungen geschützt sind.

Die Größe der Photovoltaikmodule 1 entsprechen im Wesentlichen der Größe einer EURO-Palette. Es sind jedoch auch andere Größen möglich.

Mit der Figur 2 wird das Photovoltaikmodul 1 im Detail gezeigt. Das Photovoltaikmodul 1 besteht aus den Rahmenelementen 4, welche profiliert ausgebildet sind und eine Aufnahme 11 für die plattenförmige Solarzelle 2 bzw. das Photovoltaik-Element 3 aufweisen. Die Aufnahme 11 besteht aus einem oberen Aufnahmeschenkel 12 und einem unteren Aufnahmeschenkel 13, welche vertikal beabstandet angeordnet sind und eine U-förmige Aufnahme 11 für die plattenförmige Solarzelle 2 bzw. das PhotovoltaikElement 3 ausbilden.

Bevorzugt entspricht der vertikale Abstand zwischen dem oberen Aufnahmeschenkel 12 und dem unteren Aufnahmeschenkel 13 in etwa der Plattenstärke der Solarzelle 2 bzw. das Photovoltaik-Element 3. Dadurch ist es möglich, dass das Rahmenelement 4 mit seiner Aufnahme 11 auf die Solarzelle 2 bzw. das Photovoltaik-Element 3 aufgesteckt wird.

Im Bereich des oberen Aufnahmeschenkels 9 ist ein Vorsprung 12 vorhanden. Die Abmaße des Vorsprungs 12 entsprechen in etwa den Abmaßen des Rücksprungs 13, welcher sich auf der gegenüberliegenden Seite des Rahmenelements 4 befindet. Wird nun ein erstes Rahmenelement 4'auf einem zweiten Rahmenelement 4" angeordnet, so greift der Vorsprung 12 des ersten Rahmenelements 4'in den Rücksprung des zweiten Rahmenelements 4" ein. Dadurch wird eine Lagensicherung der beiden übereinander angeordneten Rahmenelemente 4'und 4'bzw. der gesamten Photovoltaikmodule 1 erreicht.

Die Aufnahme 11 ist U-förmig ausgebildet, wobei die Länge der Aufnahme 11 bzw. der oberen und unteren Aufnahmeschenkel 9, 10 so ausgebildet ist, dass die Solarzelle 2 bzw. das Photovoltaikelement 3 zumindest im Randbereich d.h. im Bereich der Seitenkante 19 von der Aufnahme 11 gehalten wird. Der Vorsprung 12 auf dem oberen Aufnahmeschenkel 9 befindet sich im Bereich der Aufnahme 11, wobei auf der gegenüberliegenden Seite sich der Rücksprung 13 befindet. Sowohl der Vorsprung 12, als auch der Rücksprung 13 befinden sich somit im Randbereich der Solarzelle 2 bzw. des Photovoltaikelements 3. Dadurch ergibt sich eine sehr gute Lastübertragung zwischen den einzelnen Randelementen 4, 4'und 4", denn die Last, die durch mehrere, übereinander angeordnete Photovoltaikmodule 1 entsteht, wird nahezu vollkommen von den Rahmenelementen 4, 4'und 4" übertragen.

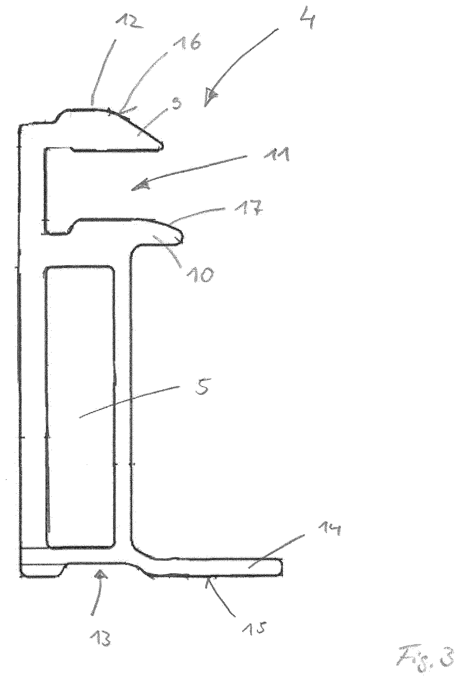

Die Figur 3 zeigt das Rahmenelement 4 mit der Aufnahme 11im Detail. Die Aufnahme 11 wird durch die beiden beabstandeten Aufnahmeschenkel 9, 10 gebildet. Auf der Oberseite des oberen Aufnahmeschenkels 9 befindet sich der Vorsprung 12, wobei in einer Flucht auf der gegenüberliegenden Seite sich der Rücksprung 13 befindet. Die Form des Vorsprungs 12 und die Form des Rücksprungs 13 ist derart ausgebildet, dass beide Teile bei einem Übereinanderstapeln von mehreren Rahmenelementen 4, 4', 4" der Vorsprung 9 in den Rücksprung 10 eingreift und dort formschlüssig gehalten ist.

Die Oberseite 16 des oberen Aufnahmeschenkels 9 weist ausschließlich runde Übergänge mit großen Radien auf. Dadurch werden insbesondere scharfe Kanten oder Ecken vermieden, welche bei einem Übereinanderstapeln von mehreren Photovoltaikmodulen 1 eine Beschädigung verursachen können.

Der untere Aufnahmeschenkel 10 weist am äußeren Punkt eine Schräge 17 auf, welche als Einführschräge ausgebildet ist. Durch die Schräge kann das Randelement 4 leichter auf die Solarzelle 2 bzw. auf das Photovoltaikelement 3 aufgesteckt werden. Darüber hinaus weist Aufnahmeschenkel 10, insbesondere im Bereich der Schräge (17) keine Kanten, sondern ausschließlich Flächen mit Radien auf. Dadurch wird das Photovoltaikelement 2 bzw. der PV-Verbund im Bereich der Aufnahme 11 besondere geschont, wenn sich das Photovoltaik-Element bzw. das PV-Laminat aufgrund erhöhter Temperaturen und/oder aufgrund von Schwingungen/Vibrationen/Stößen durchbiegt.

Das Rahmenelement 4 weist auf der Bodenseite einen Profilschenkel 14 auf, welcher sich in Richtung der Mitte der Solarzelle 2 bzw. der Photovoltaikelements 3 erstreckt. Bevorzugt ist der Profilschenkel 14 länger als die Schenkel 9, 10 der Aufnahme 11 ausgebildet. Der bodenseitige Profilschenkel 14 weist eine Grifffläche 15 für eine Hand auf. Dadurch kann das gesamte Photovoltaikmodul 1 leicht von Hand im Randbereich angehoben werden ohne das es zu einer Berührung mit der Solarzelle 2 bzw. dem Photovoltaikelement 3 kommt.

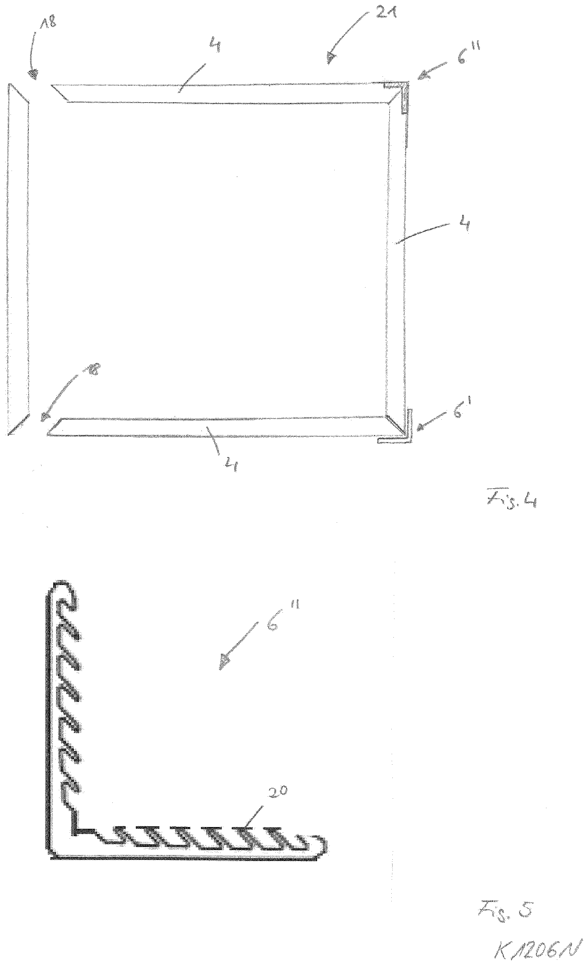

Figur 4 zeigt eine Draufsicht auf mehrere längliche Rahmenelemente 4, welche in einem Winkel aufeinanderstoßen. Die Verbindung der Rahmenelemente 4 erfolgt in den Eckbereichen durch eine Gehrung 18. Bevorzugt weisen die Endbereiche der Rahmenelemente 4 eine Winkel von 45° auf.

Die Fixierung der beiden aufeinanderstoßenden Rahmenelemente 4 erfolgt durch einen Verbinder 6. Der Verbinder 6' kann entweder auf die Rahmenelemente 4 gesetzt werden und durch eine Kleb-, Schweiß,- Löt- oder Schraubverbindung mit den Rahmenelementen 4 verbunden werden. Oder der Verbinder 6" wird durch einen Einpressvorgang in die Rahmenelemente 4 eingepresst.

Bei der Ausführungsform gemäß der Figur 4 werden insgesamt vier Rahmenelemente 4 zu einem umlaufenden Rahmen zusammengesetzt, wobei die Verbindung der einzelnen Rahmenelemente 4 durch jeweils eine Gehrung 18 und die Verbinder 6 erfolgt. Die Rahmenelemente 4 können somit einzelnen auf die jeweilige Seitenkanten 19 der Solarzelle 2 bzw. des Photovoltaikelements 3 gesteckt werden und im Anschluss daran verbunden werden.

So können beispielsweise jeweils zwei Rahmenelemente 4 durch ein Einpressen des Verbinders 6 miteinander verbunden werden. Im Anschluss daran werden die beiden L-förmigen Rahmenelemente 4 auf die Seitenkanten 19 der Solarzelle 2 bzw. des Photovoltaikelements 3 gesteckt und mit zwei weiteren Verbinder 6 verbunden.

Bei einer weiteren Ausführungsform können beispielsweise alle Rahmenelemente 4 einzeln auf die Seitenkanten 19 gesteckt werden und danach erst mit den Verbindern 6 verbunden werden.

Mit der Figur 5 wird ein L-förmigen Verbinder 6 gezeigt, welcher mittels eines Einpressdrucks eine formschlüssige Verbindung mit den angrenzenden Rahmenelementen 4 herstellt. Bei dem Einpressen des Verbinders handelt es sich um Fertigungsverfahren aus der Fügetechnik. Es ermöglicht eine formschlüssige Verbindung zwischen dem Verbinder 6 und dem Rahmenelement 4 ohne den Einsatz von Hilfsfügemitteln. Um eine bessere Verbindung zwischen dem Verbinder 6 und dem Rahmenelement 4 zu erreichen, weist der Verbinder 6 zahlreiche Lamellen 20 auf, welche in das Material des Rahmenelements 4 eingreifen.

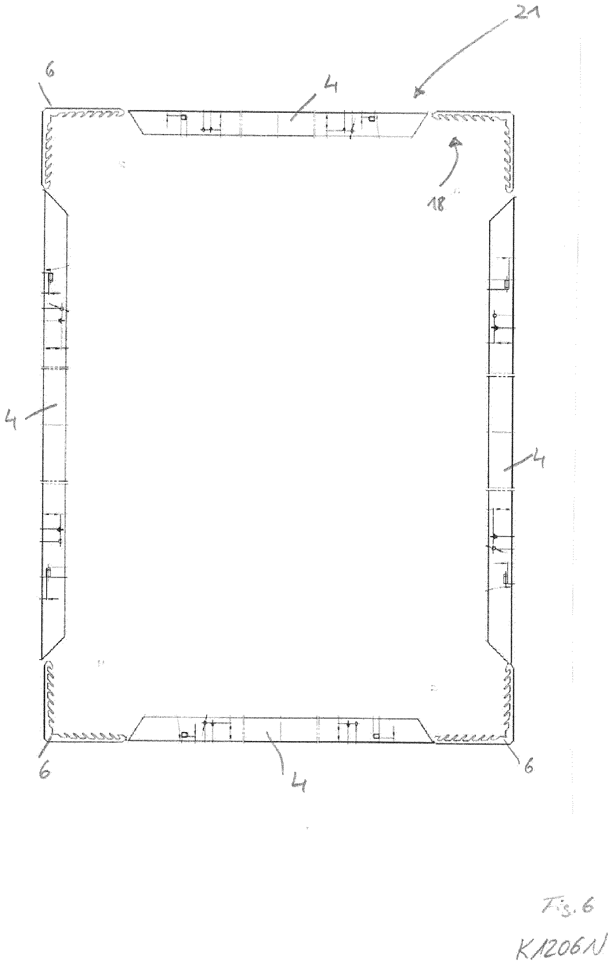

Die Figur 6 zeigt schematisch die Rahmenelemente 4, welche zusammen einen Rahmen 21 ausbilden. Die Rahmenelemente 4 sind durch die Verbinder 6 verbunden. Alle Rahmenelemente 4 weisen in an ihren Enden jeweils eine Gehrung 18 auf. Bevorzugt werden die Verbinder 6 in das Profil der Rahmenelemente 4 eingepresst, so dass sich eine glatte Oberfläche auf der Aussenseite der Rahmenelemente 4 ergibt.

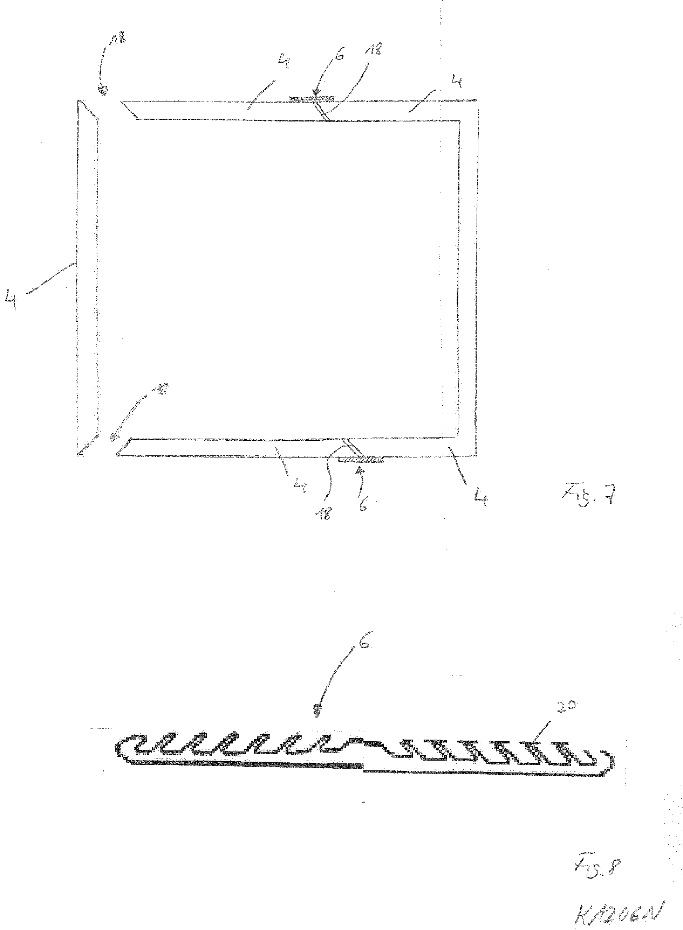

Die Figuren 7 und 8 zeigen einen geraden Verbinder 6, welcher zur Verbindung von zwei geraden, angrenzenden Rahmenelementen 4 ausgebildet ist.

Gemäß der Figur 7 weisen die zwei angrenzenden Rahmenelemente 4 eine Gehrung 18 auf und sind mit einem gerade Verbinder 6 miteinander verbunden. Durch die Verbindung von zwei geraden Rahmenelementen 4 mit einem geraden Verbinder 6 können nun auf einer Seite des PhotovoltaikElements 3 mehrere Rahmenelemente 4 hintereinander angeordnet werden.

Dadurch können beispielsweise die Rahmenelemente 4 kürzer ausgeführt werden, wodurch die Montage der Rahmenelemente 4 an dem PhotovoltaikElement 3 einfacher und schneller erfolgt. Darüber hinaus kann durch das Anordnen von mehreren Rahmenelementen 4 hintereinander und durch das Verbinden mit den geraden Verbindern 6 besonderes lange PhotovoltaikElemente 3 von einzelnen Rahmenelementen 4 umgeben werden. Auf einer Seite des Photovoltaik -Elements 3 können somit nicht nur zwei Rahmenelemente 4 hintereinander angeordnet werden, sondern es sind auch mehrere Rahmenelement 4 möglich. Die angrenzenden Endbereiche (Stirnflächen) der Rahmenelemente 4 weisen für die Verbindung untereinander entweder eine Gehrung, eine gerade oder eine komplementäre Fläche auf.

Die Verbinder 6 gemäß der Figur 7 sind beispielhaft auf der Seitenfläche des Rahmenelements 4 angeordnet. Es ist jedoch auch möglich, dass das Rahmenelement 4 in dessen Seitenfläche eine passende Ausnehmung für den Verbinder 6 aufweist. Der Verbinder 6 steht dann nicht mehr über den Umfang des Rahmenelements 4 hinaus, sondern ist der Seitenfläche des Rahmenelements 4 vollkommen aufgenommen. Darüber hinaus kann durch ein Einpressen des Verbinders 6 in das Rahmenelement 4 ebenfalls eine vollkommen ebene Seitenfläche bei dem Rahmenelement 4 erreicht werden.

Figur 8 zeigt den Verbinder 6, welcher als gerader Verbinder mit Lamellen 20 ausgebildet ist. Statt den Lamellen 20 kann der Verbinder 6 auch gerade Flächen mit Ausnehmungen für z.B. eine lösbare Verbindung mit einer Schraub- oder Nietverbindung mit dem Rahmenelement 4 aufweisen

### Zeichnungslegende

- 1.: Photovoltaikmodul
- 2.: Solarzelle
- 3.: Photovoltaik -Element
- 4.: Rahmenelement
- 5.: Hohlkammer-Profil
- 6.: Verbinder
- 7.: Palette
- 8.: Stretchfolie
- 9.: Oberer Aufnahmeschenkel
- 10.: Unterer Aufnahmeschenkel
- 11.: Aufnahme
- 12.: Vorsprung
- 13.: Rücksprung
- 14.: Profilschenkel
- 15.: Grifffläche
- 16.: Oberseite von 9
- 17.: Schräge
- 18.: Gehrung
- 19.: Seitenkante von 2 oder 3
- 20.: Lamellen

## Patentansprüche

1. Stapelbares Photovoltaikmodul (1) bestehend aus mindestens einem Photovoltaikelement (2), welches von einem Rahmen (21) umfangsseitig umgeben ist, wobei der Rahmen (21) aus mehreren Rahmenelementen (4, 4', 4") besteht, die profiliert ausgebildet sind und auf der Ober- und Unterseite mindestens einen Vorsprung (12) und/oder mindestens einen Rücksprung (13) aufweisen, welche ineinandergreifen, wenn ein erster Rahmen (21, 21') auf einem zweiten Rahmen (21, 21") angeordnet ist, wobei die Rahmenelemente (4, 4', 4") als Hohlkammerprofile ausgebildet sind und mit mindestens einem Verbinder (6) verbunden sind.

2. Stapelbares Photovoltaikmodul (1) nach Anspruch 1, **dadurch gekennzeichnet, dass** sich auf mindestens einer Seite des Photovoltaikmoduls (1) mehrere Rahmenelemente (4, 4', 4") mit Gehrungen (18) vorhanden sind und die Verbindung der einzelnen Rahmenelemente (4, 4', 4") mit jeweils einem Verbinder (6) erfolgt.

3. Stapelbares Photovoltaikmodul (1) nach Anspruch 1, **dadurch gekennzeichnet, dass** der Rahmen (21) aus vier Rahmenelementen (4) besteht, welche mittels vier Verbindern (6) in den Eckbereichen verbunden sind.

4. Stapelbares Photovoltaikmodul (1) nach einem der Ansprüche 1 bis 3, **dadurch gekennzeichnet, dass** die Rahmenelemente (4, 4', 4") jeweils eine Gehrung (18) aufweisen, wobei die beiden Schnittflächen der Rahmenelemente (4, 4', 4") aufeinanderstoßen und sich dadurch ein stufenloser Übergang zwischen den angrenzenden Rahmenelementen (4, 4', 4") ergibt.

5. Stapelbares Photovoltaikmodul (1) nach einem der Ansprüche 1 bis 4, **dadurch gekennzeichnet, dass** durch ein Einpressen der Verbinder (6) in die Rahmenelemente (4, 4', 4") eine formschlüssige Verbindung zwischen dem Verbinder (6) und dem Rahmenelement (4, 4', 4") besteht.

6. Stapelbares Photovoltaikmodul (1) nach einem der Ansprüche 1 bis 5, **dadurch gekennzeichnet, dass** das Hohlkammerprofil mindestens eine Hohlkammer (5) aufweist, in welcher sich Anschlussleitungen für die Photovoltaikmodule (1) befinden.

7. Stapelbares Photovoltaikmodul (1) nach einem der Ansprüche 1 bis 6, **dadurch gekennzeichnet, dass** das Rahmenelement (4, 4', 4") eine Abflussöffnung aufweist.

8. Stapelbares Photovoltaikmodul (1) nach einem der Ansprüche 1 bis 7, **dadurch gekennzeichnet, dass** der Vorsprung (12) in einer Flucht mit dem Rücksprung (13) angeordnet ist.

9. Stapelbares Photovoltaikmodul (1) nach einem der Ansprüche 1 bis 8, **dadurch gekennzeichnet, dass** das Rahmenelement (4, 4', 4") eine U-förmige Aufnahme (11) für das Photovoltaik-Elemente (2) aufweist.

10. Stapelbares Photovoltaikmodul (1) nach einem der Ansprüche 1 bis 9, **dadurch gekennzeichnet, dass** das Rahmenelement (4, 4', 4") einen bodenseitigen Profilschenkel (14) mit einer Grifffläche (15) aufweist.

11. Stapelbares Photovoltaikmodul (1) nach einem der Ansprüche 1 bis 10, **dadurch gekennzeichnet, dass** der Vorsprung (12) und der Rücksprung (13) sich ausschließlich im Bereich einer Seitenkante (19) des Photovoltaikelement (2) befinden.

12. Stapelbares Photovoltaikmodul (1) nach einem der Ansprüche 1 bis 11, **dadurch gekennzeichnet, dass** der Vorsprung (12) den höchsten Punkt des Rahmenelements (4, 4', 4") bildet.

## Claims

1. Stackable photovoltaic module (1) consisting of at least one photovoltaic element (2) which is surrounded peripherally by a frame (21), wherein the frame (21) consists of several frame elements (4, 4', 4") which are designed to be profiled and on the upper side and lower side have at least one projection (12) and/or at least one recess (13) which engage in one another when a first frame (21, 21') is arranged on a second frame (21, 21"), wherein the frame elements (4, 4', 4") are designed as hollow chamber profiles and are connected by at least one connector (6).

2. Stackable photovoltaic module (1) according to claim 1, **characterised in that** several frame elements (4, 4', 4") with mitre joints (18) are present on at least one side of the photovoltaic module (1) and the connection of the individual frame elements (4, 4', 4") is effected by respectively one connector (6).

3. Stackable photovoltaic module (1) according to claim 1, **characterised in that** the frame (21) consists of four frame elements (4) which are connected in the corner regions by means of four connectors (6).

4. Stackable photovoltaic module (1) according to one of claims 1 to 3, **characterised in that** the frame elements (4, 4', 4") have respectively one mitre joint (18), wherein the two cut surfaces of the frame elements (4, 4', 4") abut one another and a gradual transition is thus produced between the adjoining frame elements (4, 4', 4").

5. Stackable photovoltaic module (1) according to one of claims 1 to 4, **characterised in that** a positive connection between the connector (6) and the frame element (4, 4', 4") exists by pressing the connectors (6) into the frame elements (4, 4', 4").

6. Stackable photovoltaic module (1) according to one of claims 1 to 5, **characterised in that** the hollow chamber profile has at least one hollow chamber (5) in which connecting cables for the photovoltaic module (1) are located.

7. Stackable photovoltaic module (1) according to one of claims 1 to 6, **characterised in that** the frame element (4, 4', 4") has a discharge opening.

8. Stackable photovoltaic module (1) according to one of claims 1 to 7, **characterised in that** the projection (12) is arranged in alignment with the recess (13).

9. Stackable photovoltaic module (1) according to one of claims 1 to 8, **characterised in that** the frame element (4, 4', 4") has a U-shaped receiver (11) for the photovoltaic element (2).

10. Stackable photovoltaic module (1) according to one of claims 1 to 9, **characterised in that** the frame element (4, 4', 4") has a base-side profile limb (14) with a gripping surface (15).

11. Stackable photovoltaic module (1) according to one of claims 1 to 10, **characterised in that** the projection (12) and the recess (13) are located only in the region of a side edge (19) of the photovoltaic element (2).

12. Stackable photovoltaic module (1) according to one of claims 1 to 11, **characterised in that** the projection (12) forms the highest point of the frame element (4, 4', 4").

## Revendications

1. Module photovoltaïque empilable (1) constitué d'au moins un élément photovoltaïque (2), lequel est entouré côté périphérie par un châssis (21), dans lequel le châssis (21) est constitué de plusieurs éléments de châssis (4, 4', 4"), qui sont réalisés de manière profilée et présentent sur le côté supérieur et le côté inférieur au moins une partie faisant saillie vers l'avant (12) et/ou au moins une partie faisant saillie vers l'arrière (13), lesquelles s'imbriquent l'une dans l'autre lorsqu'un premier châssis (21, 21') est disposé sur un deuxième châssis (21, 21''), dans lequel les éléments de châssis (4, 4', 4") sont réalisés en tant que profilés à chambre creuse et sont reliés à au moins un connecteur (6).

2. Module photovoltaïque empilable (1) selon la revendication 1, **caractérisé en ce que** plusieurs éléments de châssis (4, 4', 4'') avec des onglets (18) sont présents sur au moins un côté du module photovoltaïque (1) et la liaison des différents éléments de châssis (4, 4', 4'') à respectivement un connecteur (6) est effectuée.

3. Module photovoltaïque empilable (1) selon la revendication 1, **caractérisé en ce que** le châssis (21) est constitué de quatre éléments de châssis (4), lesquels sont reliés dans les zones de coin au moyen de quatre connecteurs (6).

4. Module photovoltaïque empilable (1) selon l'une des revendications 1 à 3, **caractérisé en ce que** les éléments de châssis (4, 4', 4") présentent respectivement un onglet (18), dans lequel les deux surfaces de coupe des éléments de châssis (4, 4', 4'') s'entrechoquent et résultent ainsi en un passage continu entre les éléments de châssis (4, 4', 4") adjacents.

5. Module photovoltaïque empilable (1) selon l'une des revendications 1 à 4, **caractérisé en ce qu'**une liaison par complémentarité de forme entre le connecteur (6) et l'élément de châssis (4, 4', 4") existe du fait d'un enfoncement des connecteurs (6) dans les éléments de châssis (4, 4', 4").

6. Module photovoltaïque empilable (1) selon l'une des revendications 1 à 5, **caractérisé en ce que** le profilé à chambre creuse présente au moins une chambre creuse (5), dans laquelle se trouvent des lignes de raccordement pour les modules photovoltaïques (1).

7. Module photovoltaïque empilable (1) selon l'une des revendications 1 à 6, **caractérisé en ce que** l'élément de châssis (4, 4', 4'') présente une ouverture d'écoulement.

8. Module photovoltaïque empilable (1) selon l'une des revendications 1 à 7, **caractérisé en ce que** la partie faisant saillie vers l'avant (12) est disposée en alignement avec la partie faisant saillie vers l'arrière (13) .

9. Module photovoltaïque empilable (1) selon l'une des revendications 1 à 8, **caractérisé en ce que** l'élément de châssis (4, 4', 4") présente un logement en forme de U (11) pour l'élément photovoltaïque (2).

10. Module photovoltaïque empilable (1) selon l'une des revendications 1 à 9, **caractérisé en ce que** l'élément de châssis (4, 4', 4") présente une branche profilée (14) côté sol avec une surface de préhension (15).

11. Module photovoltaïque empilable (1) selon l'une des revendications 1 à 10, **caractérisé en ce que** la partie faisant saillie vers l'avant (12) et la partie faisant saillie vers l'arrière (13) se trouvent exclusivement dans la zone d'une arête latérale (19) de l'élément photovoltaïque (2).

12. Module photovoltaïque empilable (1) selon l'une des revendications 1 à 11, **caractérisé en ce que** la partie faisant saillie vers l'avant (12) forme le point le plus haut de l'élément de châssis (4, 4', 4").
